(19) Europäisches Patentamt
European Patent Office
Office européen des brevets

(11) **EP 2 779 678 A1**

(12) **EUROPEAN PATENT APPLICATION**

(43) Date of publication:
**17.09.2014 Bulletin 2014/38**

(51) Int Cl.:
*H04N 21/4363* (2011.01)     *H04N 21/442* (2011.01)
*H04N 21/462* (2011.01)     *H04N 21/845* (2011.01)

(21) Application number: **14150620.4**

(22) Date of filing: **09.01.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **12.03.2013   KR 20130026304**

(71) Applicant: **Samsung Electronics Co., Ltd
Gyeonggi-do 443-742 (KR)**

(72) Inventors:
• **Lee, Ji-hyun
Gyeonggi-do (KR)**
• **Sung, Young-jin
Gyeonggi-do (KR)**

(74) Representative: **Gover, Richard Paul et al
HGF Limited
Saviour House
9 St Saviourgate
York YO1 8NQ (GB)**

(54) **Method and device for sharing content**

(57)     A method and device for sharing content are provided. The method includes dividing a playback section of the content into a plurality of sections, encoding data in a first section from among the plurality of sections, transmitting the encoded data in the first section to the display device via a first network channel, and transmitting data in a second section, from among the plurality of sections, to the display device via a second network channel while transmitting the encoded data in the first section to the display device.

## FIG. 1

**Description**

**CROSS-REFERENCE TO RELATED PATENT APPLICATION(S)**

This application claims the benefit of a Korean patent application filed on March 12, 2013 in the Korean Intellectual Property Office and assigned Serial No. 10-2013-0026304, the entire disclosure of which is hereby incorporated by reference.

**TECHNICAL FIELD**

The present disclosure relates to a method and device for sharing content to allow use of a maximum instantaneous bandwidth by using two network channels simultaneously.

**BACKGROUND**

A wired and/or wireless connection between two different devices plays an important role in overcoming physical and functional limitations of an existing device. A connection between smart devices in a home or between several privately owned devices leads to a convenient and enjoyable human life, exceeding physical and functional limitations. In order to dissolve the boundaries between different devices, or in other words, in order to facilitation communication and interaction between different devices, standard protocols for compatibility are needed. A protocol used for media sharing in a home network is Digital Living Network Alliance (DLNA), and the Wireless-Fidelity (Wi-Fi) Alliance has defined and provided Miracast to share screens.

DLNA is a protocol to transmit and receive a variety of types of content such as music, pictures, and movies, between home devices. Among devices, such as PCs, TVs, phones, tablets, cameras, and other similar devices, having a network function, such as Wi-Fi or Bluetooth, devices in a same Internet Protocol (IP) band or group share contents via a network rather than a direct physical connection. A user may easily watch a movie stored in a PC via a TV connected to a Local Area Network (LAN) line, and also may easily watch or store pictures taken by a smart phone or a camera on a PC or a TV via a network. Home network devices using a DLNA standard include a Digital Media Server (DMS), a Digital Media Controller (DMC), a Digital Media Renderer (DMR), a Digital Media Player (DMP), and a Digital Media Printer (DMPr). Mobile handheld devices include a Mobile-Digital Media Server (M-DMS), a Mobile-Digital Media Controller (M-DMC), a Mobile-Digital Media Player (M-DMP), and a Mobile-Digital Media Uploader/Downloader (M-DMU/M-DMD). Files in the DMS are played by the DMR through Media Content Distribution (MCD). At this point, in general, a home network is configured through a device such as an Access Point (AP) or a router.

The Wi-Fi Alliance announced Miracast, i.e., a Wi-Fi based Peer-to-Peer (P2P) standard. Unlike existing Wi-Fi services, Miracast provides a foundation for using contents and services between devices through direct communication between terminals, without an additional AP or router. This technique is rated to support a speed of a 802.11n standard, which has a maximum speed of 300Mbps, and thus may be another option of a Wi-Fi connection via an AP.

During data transmission in a home network via an AP of a Wi-Fi network, when high-quality data are transmitted in real time, since a communication speed is not enough, buffering occurs in a DMR. An existing adaptive streaming method (Patent No. US 7,698,467 B2), devised to solve the above limitation, has disadvantages such as image quality deterioration. Moreover, since bandwidth calculation is made prior to actual transmission and transcoding is performed on the basis of a case in which a communication speed temporarily drops, even when the communication speed improves, a high quality image is not transmitted. Moreover, in a Wi-Fi network, due to the interference between adjacent different Wi-Fi APs, a communication speed may drop. In such a case, even if original content is a high quality image, a user may have to watch a low quality image.

Moreover, when a DMS transmits content to a DMR, in order to prevent a buffering issue, the DMR may first receive the content in its entirety and then may play the received content. In such a case, while the DMR plays the content, buffering does not occur. However, in a case of a movie of a large file size, a wait time before playback may be very long.

The above information is presented as background information only to assist with an understanding of the present disclosure. No determination has been made, and no assertion is made, as to whether any of the above might be applicable as prior art with regard to the present disclosure.

**SUMMARY**

Aspects of the present disclosure are to address at least the above-mentioned problems and/or disadvantages and to provide at least the advantages described below. Accordingly, an aspect of the present disclosure provides a method and device for sharing content efficiency between devices when the bandwidth of a network is less than the bit rate of content.

The present disclosure relates to a method and device for sharing content to solve a buffering issue occurring when high-quality contents are played by using the maximum instantaneous bandwidth with two simultaneous network channels and minimizing an initial loading time.

According to an aspect of the present disclosure, a method of using a device to share content with a display device is provided. The method includes dividing a playback section of the content into a plurality of sections, encoding data in a first section from among the plurality of sections, transmitting the encoded data in the first section to the display device via a first network channel, and transmitting data in a second section, from among the plurality of sections, to the display device via a second network channel while transmitting the encoded data in the first section to the display device.

According to another aspect of the present disclosure, a device to share content with a display device is provided. The device includes a control unit configured to divide a playback section of content into a plurality of sections, an encoding unit configured to encode data in a first section from among the plurality of sections, a first communication unit configured to transmit the encoded data in the first section to a display device a first network channel, and a second communication unit configured to transmit data in a second section, from among the plurality of sections, to the display device via a second network channel while the encoded data in the first section are transmitted to the display device.

According to another aspect of the present disclosure, there is provided a computer readable recording medium having a program recorded thereon, which, when executed by a computer, implements the method of using a device to share content with a display device.

Other aspects, advantages, and salient features of the disclosure will become apparent to those skilled in the art from the following detailed description, which, taken in conjunction with the annexed drawings, discloses various embodiments of the present disclosure.

## BRIEF DESCRIPTION OF THE DRAWINGS

The above and other features, and advantages of certain embodiments of the present disclosure will become more apparent from the following description taken in conjunction with the accompanying drawings, in which:

FIG. 1 is a block diagram illustrating a content sharing system according to an embodiment of the present disclosure;

FIG. 2 is a flowchart illustrating a content sharing method according to an embodiment of the present disclosure;

FIG. 3 is a flowchart illustrating a content sharing method on a basis of a comparison result of a bandwidth of a network and a bit rate of content according to an embodiment of the present disclosure;

FIG. 4 is a flowchart illustrating a content sharing method via two network channels according to an embodiment of the present disclosure;

FIG. 5 is a view illustrating content divided into two sections according to an embodiment of the present disclosure;

FIGS. 6A and 6B are views illustrating a segment point dividing a first section and a second section of content according to an embodiment of the present disclosure;

FIG. 7 is a flowchart illustrating a method of transmitting content divided into three sections via two networks according to an embodiment of the present disclosure;

FIGS. 8A to 8C are views illustrating segment points dividing content into three sections according to an embodiment of the present disclosure;

FIGS. 9A to 9D are views illustrating a content sharing GUI according to an embodiment of the present disclosure;

FIG. 10 is a block diagram illustrating a device according to an embodiment of the present disclosure; and

FIG. 11 is a block diagram illustrating a device according to another embodiment of the present disclosure.

Throughout the drawings, it should be noted that like reference numbers are used to depict the same or similar elements, features, and structures.

## DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Terms used in this specification are briefly described and the present disclosure will be described in more detail.

Terms used in the present disclosure are selected from currently widely used general terms in consideration of functions of the present disclosure. However, the terms may vary according to the intents of one of ordinary skill in the art, precedents, or the emergence of new technologies. Additionally, in certain cases, there are terms that an applicant arbitrarily selects. In this case, their detailed meanings will be listed in the corresponding specification of the present disclosure. Accordingly, the terms used in the present disclosure should be defined on the basis of the meaning that a term has and the contents across the present disclosure.

The meaning of "include," "comprise," "including," or "comprising," specifies a property, a region, a fixed number, a step, a process, an element and/or a component but does not exclude other properties, regions, fixed numbers, steps, processes, elements and/or components. Additionally, terms such as "unit" and "module" listed in the specification may refer to a unit processing at least one function or operation. This may be implemented with hardware, software, or a combination of hardware and software.

In the specification, "content" means digital information provided via a wired and/or wireless communication network. The content, according to an embodiment of the present disclosure, includes video content, such as a Television (TV) program video, a Video On Demand (VOD), User-Created Contents (UCC), a music video, a YouTube video, and other similar and/or suitable types of videos, still image content, such as pictures, drawings, and other similar types of images, text content, such as an e-book, a letter, a job file, a web page, and other similar and/or suitable types of text, music content such as music, instrumental music, sound files, a radio broadcast, and other similar and/or suitable types of sound and/or music, and applications such as widgets, games, utilities, executable files, and other similar and/or suitable applications.

Hereinafter, various embodiments of the present disclosure will be described in more detail with reference to the accompanying drawings, in order to allow one of ordinary skill in the art to easily realize the present disclosure. The present disclosure may be realized in different forms, and is not limited to the various embodiments described herein. Moreover, detailed descriptions related to well-known functions or configurations will be limited in order avoid unnecessarily obscuring subject matter of the present disclosure. Like reference numerals refer to like elements throughout.

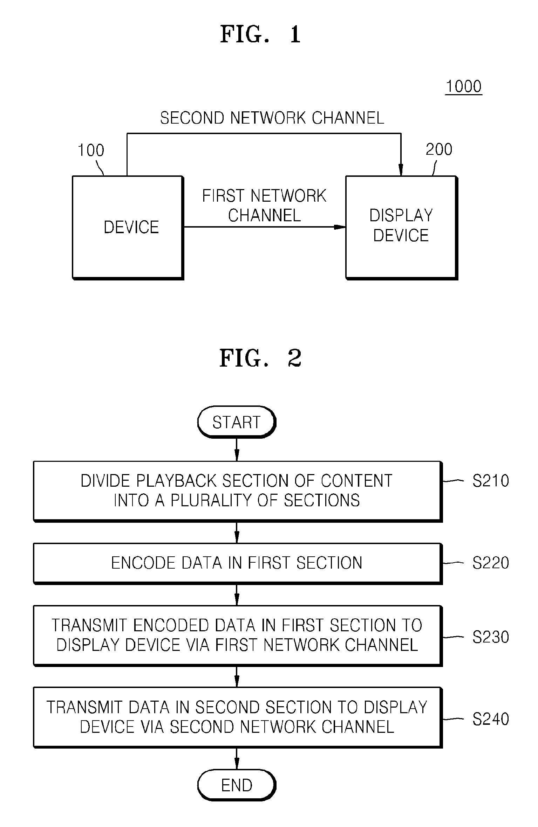

FIG. 1 is a block diagram illustrating a content sharing system according to an embodiment of the present disclosure.

Referring to FIG. 1, a content sharing system 1000 may include a device 100 and a display device 200. However, all components shown herein are not essential. The content sharing system 1000 may be realized with more components or less components than the components shown in FIG. 1.

The device 100 may be a device transmitting content to an external device. The device 100 may be realized in various forms. For example, the device 100 may be a mobile phone, a smart phone, a laptop computer, a tablet Personal Computer (PC), an e-book terminal, a terminal for digital broadcast, a Personal Digital Assistant (PDA), a Portable Multimedia Player (PMP), a navigation system, an MP3 player, and a digital camera, or any other similar and/or suitable device. The device 100 may transmit content to an external device via at least two networks. That is, the device 100 may include at least two communication units, such as two communication processors, circuits, chips, or other types of hardware that is a communication unit.

A network according to an embodiment of the present disclosure may be implemented with a wireless communication technique, such as Wireless Fidelity (Wi-Fi), Wi-Fi Direct (WFD), home Radio Frequency (RF), Bluetooth, High Rate-Wireless Personal Area Network (HR-WPAN), Ultra Wideband (UWB), Low Rate-Wireless Personal Area Network (LR-WPAN), Institute for Electrical and Electronics Engineers (IEEE) 1394, Near Field Communication (NFC), and any other similar and/or suitable wireless communication technique.

The device 100 divides a playback section of content that is to be transmitted into a plurality of divided sections, and simultaneously transmits data in the plurality of divided sections to the display device 200 via a plurality of network channels. This will be described in more detail later. Moreover, the display device 200 may be one of various kinds of devices including a display panel. For example, the display device 200 may be a smart TV, a terminal for digital broadcast, a laptop computer, a tablet PC, a mobile phone, a smart phone, an e-book terminal, a PDA, a PMP, a navigation system and any other similar and/or suitable display device.

Moreover, the display device 200 may communicate with the device 100 via a network. The network according to an embodiment of the present disclosure may be implemented with a wireless communication technique such as Wi-Fi, WFD, home RF, Bluetooth, HR-WPAN, UWB, LR-WPAN, IEEE 1394, Near Field Communication (NFC), and any other similar and/or suitable wireless communication technique. The display device 200 may receive content from the device 100, and then may decode or play the received content. Additionally, the display device 200 may include a nonvolatile memory, and may store the received content in the nonvolatile memory.

FIG. 2 is a flowchart illustrating a content sharing method according to an embodiment of the present disclosure.

Referring to FIG. 2, when a bandwidth of a network is less than a bit rate of content, a method of the device 100 to efficiently share content with the display device 200 will be described in more detail.

In operation S210, the device 100 may divide a playback section of content into a plurality of sections. According to an embodiment of the present disclosure, the device 100 may divide the playback section of content into the plurality of sections in consideration of the bit rate of content and the bandwidth of a network channel. The device 100 may divide an entire playback section of content into a plurality of sections. Additionally, when the playback position of content being played on the device 100 is changed, the device 100, according to another embodiment of the present disclosure, may divide a playback section that is between the changed playback position and the last playback position into a plurality of sections. For example, the device 100 may divide the playback section of content into a first section and a second section. The content may include still images and videos. For example, the content may include broadcast content, educational content, music content, movie content, photo content, electronic book content, and any other similar and/or suitable type of content.

In operation S220, the device 100 may encode the data in a first section from among a plurality of sections. At this point, the device 100 may encode the data in the first section through various encoding algorithms. For example, the encoding algorithm may include Motion Picture Experts Group (MPEG)-2 (MPEG-2), MPEG-4, H.264, and AVC (Advanced Video Coding), or any other similar and or suitable encoding algorithm. According to an embodiment of the present disclosure, the device 100 may encode frames in the first section at a predetermined compression ratio through use of the H.264 encoding algorithm. That is, the device 100 may downscale a resolution of the first section by encoding the data in the first section.

In operation S230, the device 100 may transmit the encoded data in the first section to the display device 200 via a first network channel. The encoded data in the first section may be transmitted quickly to the display device 200 due to a low resolution, i.e., a low bit rate, and then played. At this point, the device 100 encodes the data in the first section through a mirroring technique using Miracast, and then transmits the encoded data to the display device 200. The first network channel, according to an embodiment of the present disclosure, may be a channel of a variety of network types, such as WFD), Bluetooth, ZigBee, NFC, Bluetooth Low Energy (BLE), and any other similar and/or suitable type of network, but hereinafter, for convenience of description, the first network channel will be described as being a WFD channel.

In operation S240, the device 100 may transmit the data in the second section to the display device 200 via a second network channel while the encoded data in the first section are transmitted. The second network channel, according to an embodiment of the present disclosure, may be a channel of a variety of network types, such as Wi-Fi, Bluetooth, ZigBee, NFC, BLE, and any other similar and/or suitable type of network, but hereinafter, for convenience of description, the second network channel will be described as being a Wi-Fi channel.

The device 100 newly encodes the first section of content to be transmitted and transmits the encoded first section to the display device 200 via the first network channel and simultaneously transmits the original data of the remaining sections of the content to the display device 200. Accordingly, the display device 200 plays a low quality image received through Mirroring during an initial data loading time, and plays the original content from a predetermined playback time in order to provide a high quality image to a user.

Especially, in a case of movie content, since an insignificant image relating to advertisements, an introduction to studios, a cast listing, or other similar images that are insignificant to a viewer, may be displayed at the beginning of the movie content, the device 100 performs compression-encoding on the first part of content to allow the display device 200 to instantly play the first part of the content. From a predetermined section of the content, the device provides the original data to the display device 200 to allow the display device 200 to play the high quality movie content without buffering.

When a user's sharing request corresponding to a predetermined content stored in the device 100 is detected, then the device 100 instantly responds to the user's sharing request. A method of the device 100 to efficiently transmit content to the display device 200 via a network will be described in more detail below.

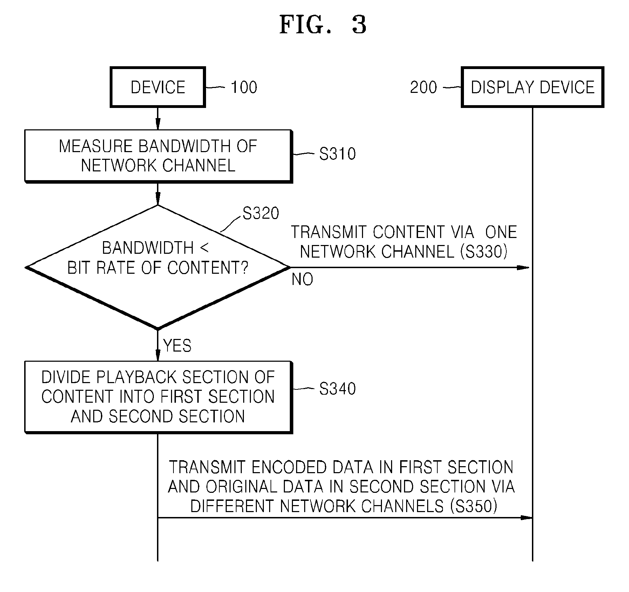

FIG. 3 is a flowchart illustrating a content sharing method on a basis of a comparison result of a bandwidth of a network and a bit rate of content according to an embodiment of the present disclosure.

Referring to FIG. 3, a case in which a user plays a predetermined content stored in the device 100 on the external display device 200 will be described as an example.

In operation S310, the device 100 may measure a bandwidth of a network channel. For example, the device 100 may measure at least one of a bandwidth of a first network channel and a bandwidth of a second network channel. The device 100 may measure a bandwidth, which may also be referred to as a transfer rate, by transmitting predetermined data to the display device 200 via at least one of the first network channel and the second network channel. Since a method of measuring the bandwidth of a network channel is a well-known technique, its detailed description is omitted herein.

In operation S320, the device 100 may compare the bandwidth of a network channel and a bit rate of a predetermined content in order to determine if the bandwidth of the network channel is less than the bit rate of the predetermined content. If at least one of the bandwidth of the first network channel and the bandwidth of the second network channel is greater than the bit rate of a predetermined content, then, in operation S330, the device 200 may transmit the original data of the content to the display device 200 via a network channel having a greater bandwidth than a bit rate.

For example, if the bandwidth of a Wi-Fi communication channel is greater than the bit rate of a predetermined content, then the device 200 may transmit the original data of the predetermined content to the display device 200 via the Wi-Fi communication channel. In this case, even when the device 100 transmits the original data of the predetermined content to the display device 200, since the bandwidth of the Wi-Fi communication channel is greater than the bit rate of the predetermined content, the display device 200 may play the predetermined content without buffering. Moreover, if each of the bandwidth of the first network channel and the bandwidth of the second network channel is less than the bit rate of the predetermined content, then, for each time the display device 200 plays the content, buffering is inevitable.

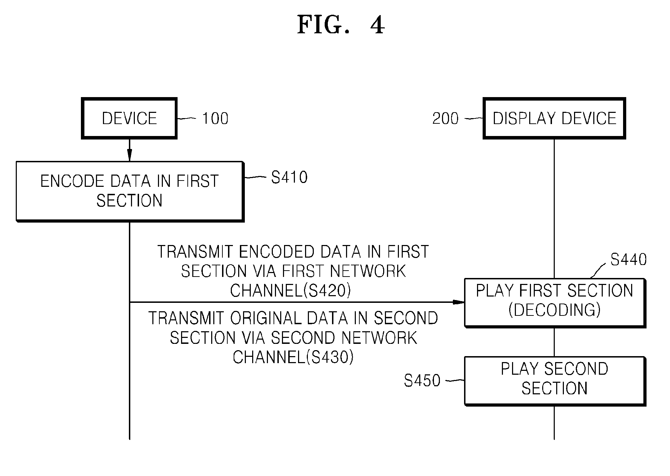

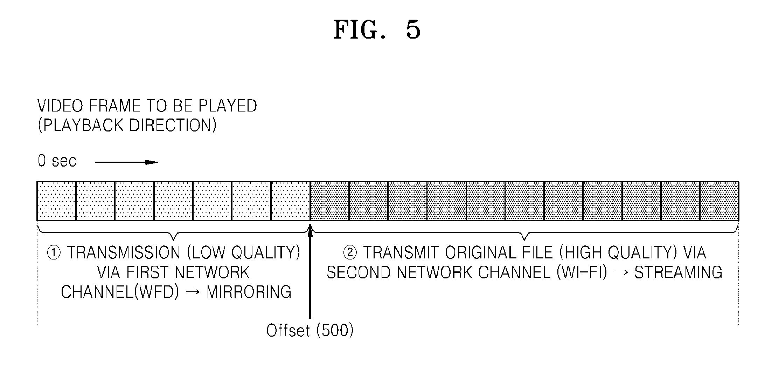

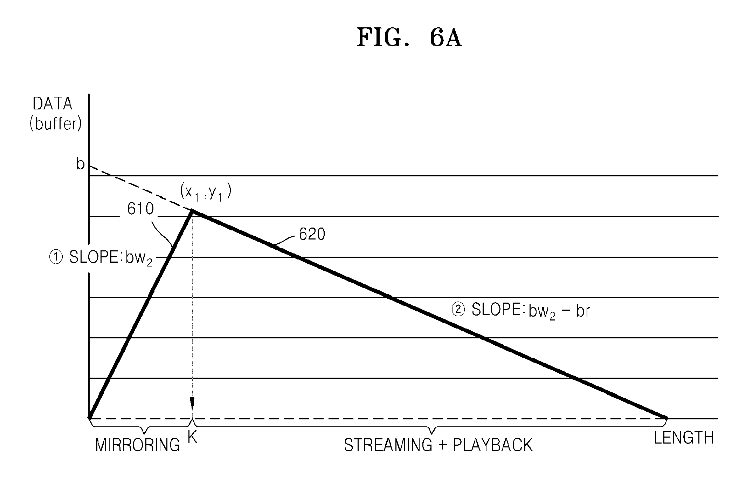

Accordingly, in operation S340, the device 100 may divide the playback section of the content into a first section and a second section in order to take advantage of the combined bandwidth of two network channels, and such an operation will be described later with reference to FIGS. 5 and 6A - 6B. In operation S350, the device 100 may encode the data in the first section from among the playback sections of the content, in low quality, and then may transmit the encoded data in the first section and the original data in the second section via two network channels, respectively, in order to simultaneously and respectively transmit the first section and the section to the display device 200. In this case, since the instantaneous bandwidth is used at a maximum, the display device 200 may instantly play the content stored in the device 200, as will be described with reference to FIG. 4.

FIG. 4 is a flowchart illustrating a content sharing method via two network channels according to an embodiment of the present disclosure.

In operation S410, the device 100 may encode the data in the first section in consideration of the bandwidth of a first network channel. In operation S420, the device 100 may transmit the encoded data in the first section to the display device 200 via the first network channel. Then, in operation S430, the device 100 may mirror the data in the first section via the first network channel and may simultaneously transmit the original data in the second section to the display device 200 via the second network channel.

Then, in operation S440, the display device 200 may receive the original data in the second section via the second network channel and may store the received original data in a memory while decoding and playing the data in the first section received via the first network channel.

In operation S450, when the playback of the first section is completed, the display device 200 may continuously play the second section of content by using the data in the second section stored in the memory. The playback of the first section and the playback of the second section can be done continuously.

That is, according to an embodiment of the present disclosure, although the encoded data, which may be compressed data, in the first section may have a lower resolution than the original data, a bit rate is also lowered. Therefore, the device 100 may quickly transmit the encoded data in the first section to the display device 200, and the display device 200 may instantly play the first section. Additionally, since the display device 200 receives the original data in the second section while simultaneously playing the first section, the display device 200 may play high quality content from the second section. Accordingly, it is important to efficiently divide the first section and the second section in order to prevent a buffering issue in the display device, while minimizing the first section from which low quality content is transmitted.

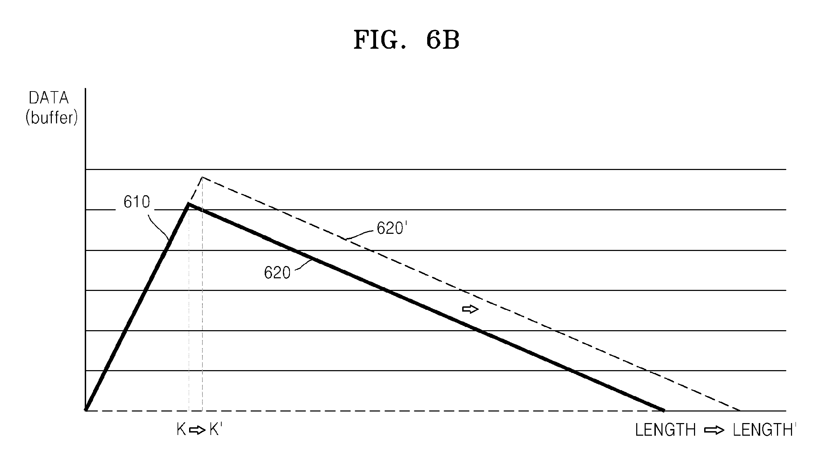

Hereinafter, when the bandwidths of the first network channel and the second network channel are less than the bit rate of content, a method of the device 200 to divide the playback section of the content into a plurality of sections will be described in more detail with reference to FIGS. 5 and 6.

FIG. 5 is a view illustrating content divided into two sections according to an embodiment of the present disclosure.

Referring to FIG. 5, the playback section of content may be divided into a first section and a second section according to an embodiment of the present disclosure. At this point, the first section is a section from which data are mirrored to the display device 200 via the first network channel, which may be a WFD channel, and the second section is a section from which original data are transmitted via the second network channel, which may be a Wi-Fi channel.

In embodiments of the present disclosure, a segment point for dividing the first section and the second section may be represented as an offset 500. That is, the offset 500, in embodiments of the present disclosure, may be a starting point at which original data begins to be transmitted in the playback section of content.

FIGS. 6A and 6B are views illustrating a segment point dividing a first section and a second section of content according to an embodiment of the present disclosure.

Referring to FIGS. 6A and 6B, and hereinafter, it is assumed that the bandwidths of the first network channel and the second network channel are less than the bit rate of content. Additionally, the bandwidth of the first network channel is represented as 'bw$_1$' and the bandwidth of the second network channel is represented as 'bw$_2$' The bit rate

of content is represented as 'br' and the playback length of content is represented as 'length'. The offset is represented as K.

A graph shown in FIG. 6A is a graph for calculating a segment point, or in other words, an offset, dividing the first section and the second section. Here, an x-axis represents the playback length of the content and a y-axis represents data accumulated in a memory, such as a buffer memory, of the display device 200.

According to an embodiment of the present disclosure, while the data in the first section are mirrored, since the data in the second section received via the second network channel are accumulated in a memory of the display device 200, a first line 610 having the slope of $bw_2$ may be drawn. Additionally, when mirroring is completed, since the display device 200 plays the data accumulated on the memory and continuously receives the data in the remaining section from the device 100 via the second network channel, a second line 620 having the slope of $bw_2$-br may be drawn. At this point, since $bw_2$ < br, the slope of $bw_2$-br will have a negative value.

A first equation ① of the first line 610 is y = ($bw_2$)*x. A second equation ② of the second line 620 is y = ($bw_2$-br)*x + b. At this point, since the second line 620 has a coordinate of (length, 0), then b = - ($bw_2$-br)*length. The second equation ② of the second line 620 is summarized as y = ($bw_2$-br)*x - ($bw_2$-br)*length.

Additionally, the x coordinate value $x_1$ of the intersection point of the first line 610 and the second line 620 may be the offset K. Accordingly, when $x_1$ is obtained by using the first equation ① and the second equation ②, the offset K dividing the first section and the second section is defined as shown below.

$$\therefore K = \frac{(bw_2 - br) \times length}{br}$$

That is, the device 100 may determine a segment point dividing the first section and the second section based on the bandwidth of the second network channel, the playback length of content, and the bit rate of content.

As shown in FIG. 6B, when the playback length of content becomes longer such that the value of Length becomes Length', since the second line 620 moves to the right, while maintaining the same slope, so as to be the second line 620', and the segment point, i.e., the offset, dividing the first section and the second section moves to the right such that K shifts to K'.

That is, according to an embodiment of the present disclosure, as the playback length of content to be transmitted from the device 100 to the display device 200 becomes longer, the mirrored playback section is increased.

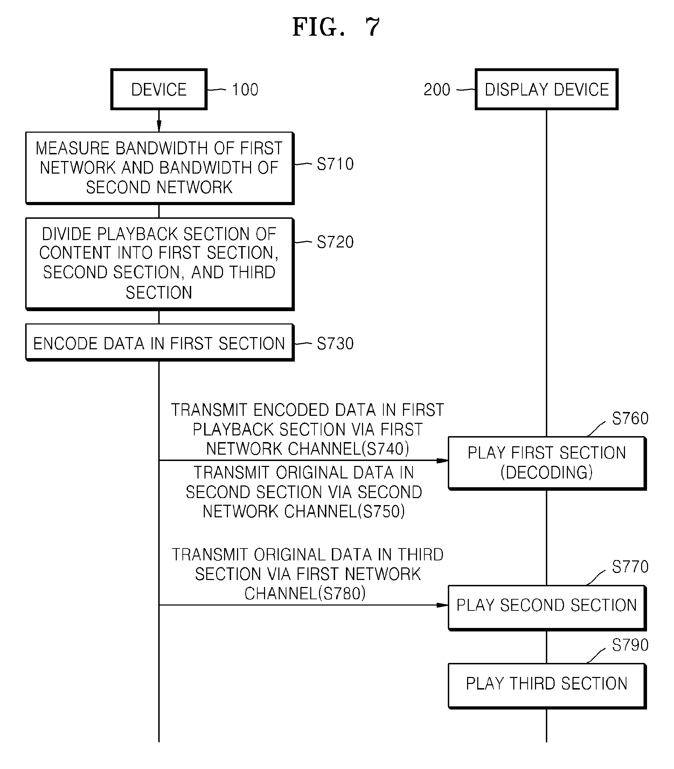

FIG. 7 is a flowchart illustrating a method of transmitting content divided into three sections via two networks according to an embodiment of the present disclosure.

Referring to FIG. 7, in operation S710, the device 100 may measure each of the bandwidth of the first network channel and the bandwidth of the second network channel. At this point, each of the bandwidth of the first network channel, which may be a WFD channel, and the bandwidth of the second network channel, which may be a Wi-Fi channel, may be less than the bit rate of the content.

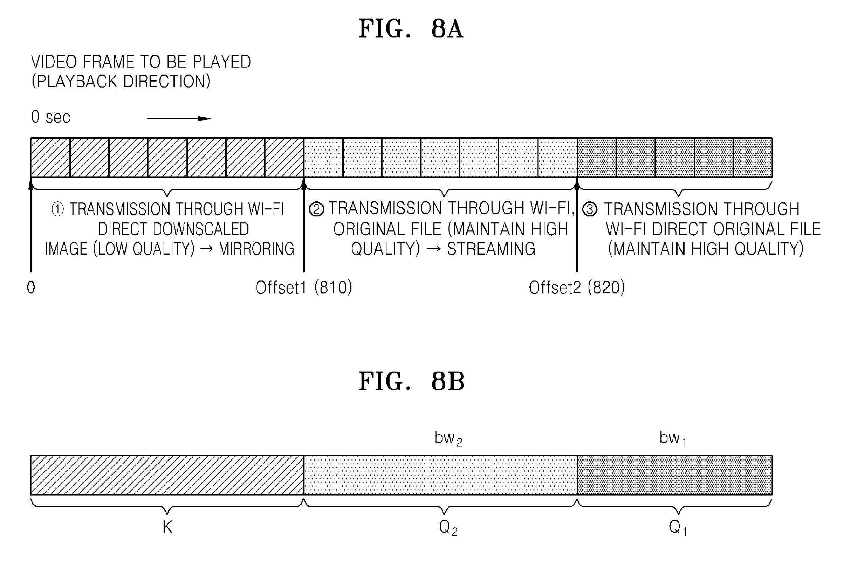

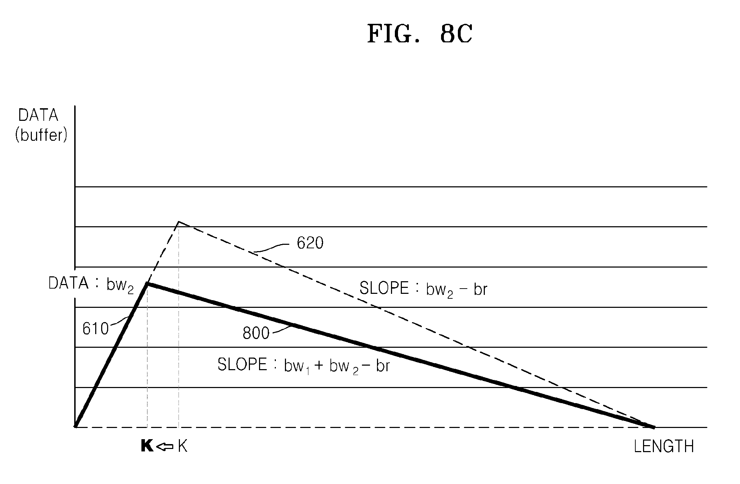

In operation S720, the device 100 may divide the playback section of the content into a first section, a second section, and a third section. At this point, the first section is a section of which data are mirrored to the display device 200 via the first network channel. The second section is a section of which original data are transmitted to the display device 200 via the second network channel. The third section is a section of which the original data are transmitted to the display device 200 via the first network channel. For example, the device 100 may divide the first section, the second section, and the third section based on the bandwidth of the first network channel, the bandwidth of the second network channel, the bit rate of the content, and the playback length of content. This will be described later with reference to FIG. 8.

In operation S730, the device 100 may encode the data in the first section. At this point, the device 100 may encode the data in the first section with a predetermined compression ratio in consideration of the bandwidth of the first network channel. In operation S740, the device 100 may transmit the encoded data in the first section to the display device 200 via the first network channel. Then, in operation S750, the device 100 may mirror the data in the first section via the first network channel and may simultaneously transmit the original data in the second section to the display device 200 via the second network channel.

At this point, in operation S760, the display device 200 may receive the original data in the second section via the second network channel and may store the received original data in a memory while decoding and playing the data in the first section received via the first network channel. In operation S770, when the playback of the first section is completed, then the display device 200 may continuously play the second section of the content by using the data in the second section which is stored in the memory. The playback of the first section and the playback of the second section may be done continuously such that the second section is played back immediately and seamlessly after playback of the first section is completed.

Moreover, while the second section is played after the playback of the first section is completed, the first network channel enters into an idle state. Accordingly, in operation S780, the device 100 may transmit the original data in the third section to the display device 200 via the first network channel while the first network channel is in an idle state. At this point, the display device 200 may receive the original data in the third section via the first network channel and may store the received original data in a memory while playing the data in the second section received via the second network channel. In operation S790, the display device 200 may continuously play the third section of the content by using the data in the third section stored in the memory when the playback of the second section is completed such that the third section is played back immediately and seamlessly after playback of the second section is completed.

When the playback section of the content is divided into three sections, since the device 100 transmits the original data by using both the first network channel and the second network channel, a mirroring section may become shorter in comparison to the case in which the playback of the content is divided into two sections. Moreover, according to an embodiment of the present disclosure, the display device 200 may receive the original data in the first section, which is encoded in low quality, from the device 100 and may store the received original data after the content playback is completed. In this case, a user may play content again and view high quality content through the display device 200. Hereinafter, a method of the device 100 dividing the playback section of content into three sections will be described in more detail.

FIGS. 8A to 8C are views illustrating segment points dividing content into three sections according to an embodiment of the present disclosure.

Referring to FIG. 8A, the playback section of content may be divided into a first section, a second section, and a third section according to an embodiment of the present disclosure. At this point, the first section is a section of which data are mirrored to the display device 200 via the first network channel, such as a WFD channel. The second section is a section of which original data are transmitted via the second network channel, such as a Wi-Fi channel. The third section is a section of which the original data are transmitted to the display device 200 via the first network channel.

In the present disclosure, a segment point for dividing the first section and the second section may be represented as an Offset1 810, and a segment point for dividing the second section and the third section may be represented as an Offset2 820. That is, in this specification, the Offset1 810 indicates a starting point at which original data are transmitted via the second network channel in the playback section of content, and the Offset2 820 indicates a starting point at which original data are transmitted via the first network channel in the playback section of content.

Referring to FIG. 8B, in a rough illustration of a frame of video content shared with the display device 200, the playback length of the first section is represented as K, the playback length of the second section transmitted via the second network channel is represented as $Q_2$, and the playback length of the third section transmitted via the first network channel is represented as $Q_1$. That is, the Offset1 810 may correspond to K and the Offset2 may correspond to $K+Q_2$.

Additionally, the bandwidth of the first network channel is represented as 'bw$_1$' and the bandwidth of the second network channel is represented with 'bw$_2$'. The bit rate of content is represented as 'br' and the playback length of content is represented as 'length'.

A graph shown in FIG. 8C is a graph for calculating a segment point, or in other words, an offset, dividing the first section and the second section. Here, an x-axis represents the playback length of the content and a y-axis represents data accumulated in a memory, such as a buffer memory, of the display device 200.

Referring to FIG. 6A and FIG. 8C, the first line 610 of FIG. 6A has the same slope as the first line 610 of FIG. 8C, and the second line 800 of FIG. 8C has a slope of 'bw$_1$+bw$_2$-br', which is gentler than the slope of the second line 620, which is shown in both

FIGS. 6A and 8C. This is because when the playback of the first section is completed in the display device 100, since the device 100 transmits the original data in the second section to the display device 200 via the second network channel and transmits the original data in the third section to the display device 200 via the first network channel, a network bandwidth increases from bw$_2$ to bw$_1$ + bw$_2$.

Referring to FIG. 8C, the x coordinate value $x_1$ of the intersection point of the first line 610 and the second line 800 may be the offset K. When the graphs of FIG. 8A and

FIG. 6A are compared, since only the bandwidth changes from bw$_2$ to bw$_1$ + bw$_2$, if bw$_1$ + bw$_2$, instead of bw$_2$, is applied to the equation obtaining K defined in FIG. 6A, then the offset K dividing the first section and the second section in FIG. 8A is defined as follows.

$$\therefore K = \frac{(bw_1 + bw_2 - br) \times length}{br}$$

Moreover, since a relationship of bw$_2$:bw$_1$ = $Q_2$:$Q_1$ is established in FIG. 8B and $K+Q_2+Q_1$ = length, $Q_2$ is

obtained using $Q_2 = (bw_2/bw_1)Q_1$, $Q_1 = $ length $- Q_1 - K$, and $K = \{(bw_1+bw_2-br)*length\}/br$.

Also, when $K+Q_2$ is obtained according to the equation below, the Offset2 820 dividing the second section and third section is also determined.

$$\therefore\ K + Q_2 = \frac{(bw^2 + bw_1 bw_2 - brbw_1 + brbw_2) \times \text{length}}{br(bw_1 + bw_2)}$$

$$= \left[\frac{bw_1}{br} - \frac{bw_1 - bw_2}{bw_1 + bw_2}\right] \times \text{length}$$

That is, the device 100 may determine the segment points between the first section, the second section, and the third section in consideration of the bit rate of content, the playback length of content, the bandwidth bw1 of the first network channel, and the bandwidth bw2 of the second network channel.

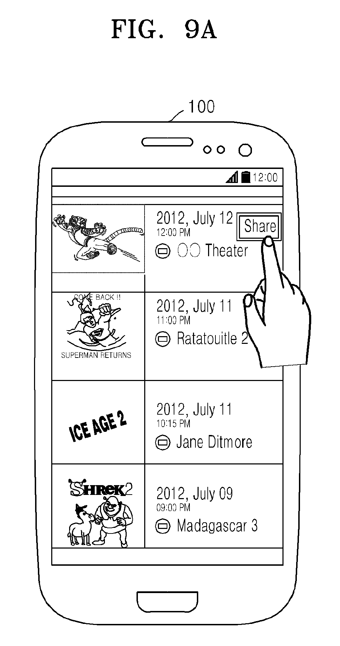

FIGS. 9A to 9D are views illustrating a content sharing GUI according to an embodiment of the present disclosure.

The case in which a high quality movie stored in the device 100, which may be a mobile phone, a camera, a tablet pc, a slate pc, or any other similar type of electronic device, is displayed by the display device 200, which may be a TV, a high quality TV, a computer monitor, or any other similar type of display device, will be described as an example.

Referring to FIG. 9A, the device 100 may detect a user's sharing request gesture regarding predetermined content. For example, a user may select content, which is to be transmitted to a high quality TV and played, from a content list displayed on the device 100.

The sharing request gesture may be any of a variety of suitable gestures. For example, the sharing request gesture may include a tap, a double tap, a swipe, a flick, and a drag and drop, or any other similar and/or suitable gesture for inputting a sharing request. The tap gesture an operation in which a user touches a screen by using a finger or a touch tool, such as a stylus, or an electric pen, and then lifts it immediately from the screen without moving the finger or the touch tool to another position on the screen.

The double tap gesture may be an operation in which a user touches a screen twice by using a finger or a touch tool. The drag gesture may be an operation in which a user touches a screen by using a finger or a touch tool, and moves the finger or the touch tool to another position on the screen while maintaining the touch. Through the drag gesture, which may also be referred to as a drag operation, an object is moved, or a panning operation described later is performed.

The flick gesture may be an operation in which a user executes a drag a finger or a touch tool at a speed of more than a critical speed, such as a speed of about 100 pixels/second or any other similar and/or suitable speed. The drag gesture, which may also be referred to as a panning operation, is distinguished from the flick gesture on the basis of whether a movement speed of a finger or a touch tool is greater than a critical speed. The drag and drop gesture may be an operation in which a user drags an object to a predetermined position on a screen by using a finger or a touch tool and then releases it. The swipe gesture may be an operation in which a user moves an object according to a predetermined distance in a parallel or a vertical direction while touching the object on a screen by using a finger or a touch tool. The movement in a diagonal direction may not be recognized as a swipe event.

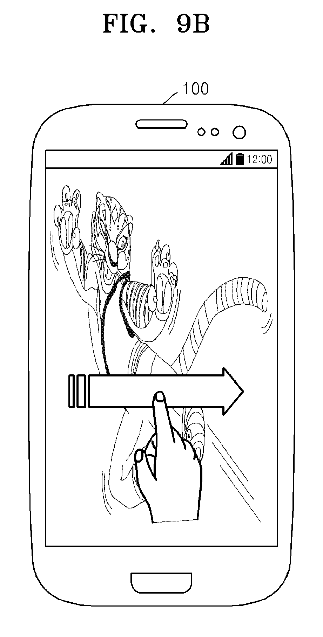

Referring to FIG. 9B, the device 100 may detect a user's sharing request gesture corresponding to predetermined content being played. For example, when a user flicks a content playback screen in a predetermined direction, the device 100 may detect the flick gesture as a user's sharing request gesture corresponding to the predetermined content being played. That is, a user may transmit the predetermined content being played in the device 100 to the display device 200 and may allow the display device 200 to continuously play the predetermined content.

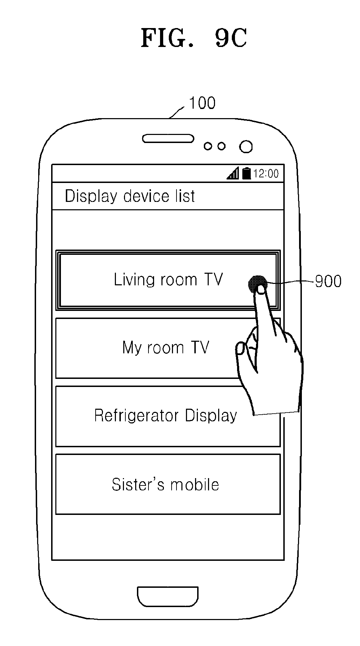

Referring to FIG. 9C, when a user's sharing request gesture corresponding to the predetermined content is detected, the device 100 may display a list of display devices that can share content on a screen. In this case, a user may select a display device to share content with from the list. For example, a user may select a Living room TV 900.

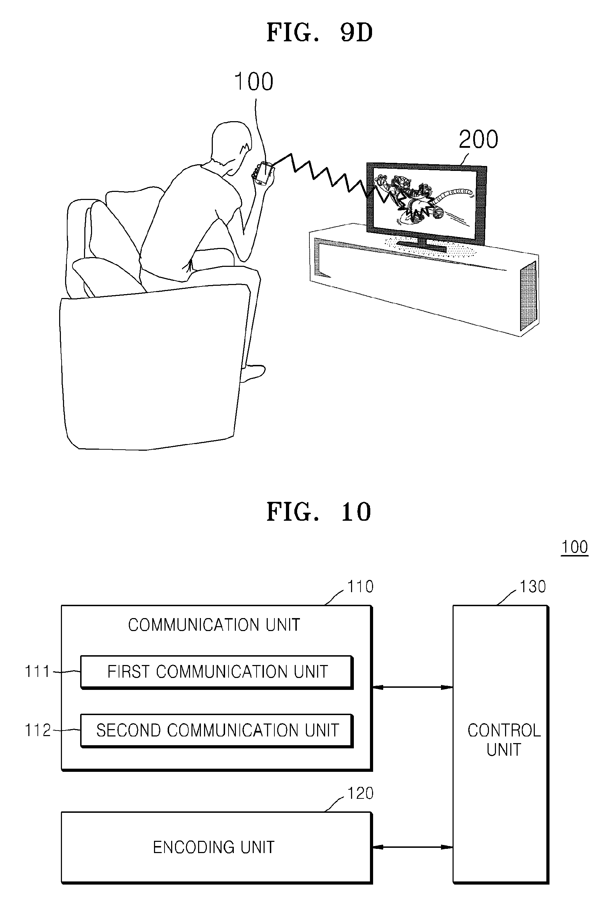

Referring to FIG. 9D, the device 100 confirms the bandwidth of the first network or the bandwidth of the second network. If the bit rate of content selected by a user is greater than the bandwidth of the first network and the bandwidth of the second network, then the device 100 may divide the playback section of the content into a plurality of sections. At this point, the device 100 encodes the first portion data in the plurality of sections and mirrors the encoded first portion data to the Living room TV 900, and then transmits the remaining original data to the TV 900 via the second network channel. Thus, according to an embodiment of the present disclosure, the content that is playing in a portable terminal may be continuously played and may be comfortably viewed by a user without buffering of the content, through the Living room TV 900.

FIG. 10 is a block diagram illustrating a device according to an embodiment of the present disclosure.

Referring to FIG. 10, the device 100 may include a communication unit 110, an encoding unit 120, and a control unit 130. However, all components shown herein are not essential. The device 100 may be realized with more components or less components than the shown components.

The communication unit 110 may include at least one component that allows communication between the device 100 and the display device 200 or between the device 100 and a repeater or an access point or other similar devices. For example, the communication unit 110 may include a wireless internet module, a wired internet module, a short range communication module, or any other similar and/or suitable component that allows communication between the device 100 and another device.

In addition, the communication unit 110 may include a first communication unit 111 and a second communication unit 112 to simultaneously transmit content via at least two network channels. That is, the first communication unit 111 and the second communication unit 112 may use different network channels.

The first communication unit 111 may transmit the encoded data in the first section to the display device 200 via the first network channel, so as to provide Mirroring. Additionally, the first communication unit 111 may transmit the data in the third section to the display device 200 via the first network channel while the data in the second section are played in the display device 200. The second communication unit 111 may transmit the data in the second section to the display device 200 via the second network channel while the first communication unit 111 transmits the encoded data in the first section. A network according to an embodiment of the present disclosure may be implemented with a wireless communication technique such as Wi-Fi, WFD, home RF, Bluetooth, HR-WPAN, UWB, LR-WPAN, IEEE 1394, NFC, and any other similar and/or suitable wireless communication technique.

The encoding unit 120 may encode the data in the first section of the playback section of content. The encoding unit 120 may encode the data in the first section through various encoding algorithms. For example, the encoding algorithm may include MPEG-2, MPEG-4, H.264, AVC, and any other similar and/or suitable encoding algorithm. According to an embodiment of the present disclosure, the encoding unit 120 may encode the frames in the first section at a predetermined compression ratio through use of the H.264 encoding algorithm. That is, the encoding unit 120 may downscale the resolution of the first section by encoding the data in the first section.

The control unit 130 controls overall operations of the device 100 in general. That is, the control unit 130 may generally control the communication unit 110 and the encoding unit 120 by executing the programs stored in a memory. The control unit 130 may divide the playback section of content into a plurality of sections. At this point, the control unit 130 may determine a segment point, i.e., an offset, between the first section and the second section in consideration of the bit rate of content, the playback length of content, and the bandwidth of the second network channel. Additionally, the control unit 130 may change the playback position of content on the basis of a user input, and may divide the playback section from the changed playback position to the last playback position into a plurality of sections.

The control unit 130 may compare the bandwidth of the second network channel and the bit rate of content, and on the basis of the comparison result, may selectively divide the playback section of content. For example, when the bandwidth of the second network channel is less than the bit rate of content, the control unit 130 divides the playback section of the content into a plurality of sections. When the bandwidth of the second network channel is not less than the bit rate of content, since buffering is not an issue, then the control unit 130 may not divide the playback section of the content into a plurality of sections. In addition, the control unit 130 may determine the segment points between the first section, the second section, and the third section in consideration of the bit rate of content, the playback length of content, the bandwidth of the first network channel, and the bandwidth of the second network channel. Furthermore, the control unit 130 may be any suitable type of hardware element, such as a computer chip, an Integrated Circuit (IC) and Application Specific IC (ASIC), a processor, or any other similar and/or suitable type of hardware element.

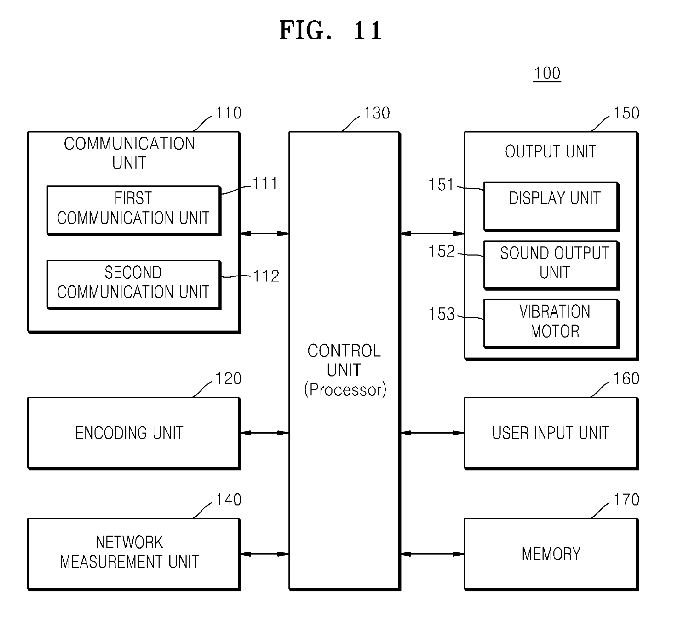

FIG. 11 is a block diagram illustrating a device according to another embodiment of the present disclosure.

Referring FIG. 11, the device 100 may include a network measurement unit 140, an output unit 150, a user input unit 160, and a memory 170, in addition to the communication unit 110, the encoding unit 120, and the control unit 130.

The network measurement unit 140 may measure at least one of the bandwidth of a first network channel and the bandwidth of a second network channel. The network measurement unit 140 may measure a bandwidth, or in other words a transfer rate, by transmitting predetermined data to the display device 200 via at least one of the first network channel and the second network channel. Since a method of measuring a bandwidth of a network channel is a well-known technique, its detailed description is omitted herein.

The output unit 150 outputs an audio signal, a video signal, a vibration signal, or any other similar and/or suitable signal to be outputted, and thus, may include a display unit 151, a sound output module 152, and a vibration motor 153.

The display unit 151 displays, or in other words outputs, the information processed in the device 100. For example, in the case of an incoming phone call, the display unit 151 may display a User Interface (UI) or a Graphic User Interface (GUI), which relates to a call, or may display a list of searched display devices 200 in the case of a search mode of the display device 200.

Moreover, when the display 151 and a touch pad form a layered structure to serve as a touch screen, the display unit 151 may be used as an input device in addition to an output device. The display unit 151 may include at least one of a Liquid Crystal Display (LCD), a Thin Film Transistor (TFT)- LCD, an Organic Light-Emitting Diode (OLED) display, a flexible display, a 3D display, an electrophoretic display or any other similar and/or suitable display device.

There may be at least two display units 151 according to the implementation type of the device 100.

The sound output unit 152 may output the audio data received from the communication unit 110 or stored in the memory 170. The sound outputting module 152 may output sound signals relating to functions performed in the device 100such as a call signal reception sound, a message reception sound, a content playback, or any other similar and/or suitable function. The sound output module 152 may include a speaker and a buzzer.

The vibration motor 153 may output a vibration signal. For example, the vibration motor 153 may output a vibration signal corresponding to an output of audio data or video data, such as the call signal reception sound and the message reception sound. Additionally, the vibration motor 153 may output a vibration signal in response to a touch input on a touch screen or may output the vibration signal corresponding to any suitable event, function and/or operation.

The user input unit 160 may be a unit that allows a user to input data to control an operation of the device 100. For example, the user input unit 160 may include a key pad, a dome switch, a touch pad which may be a capacitive touch type, a pressure resistive layer type, an infrared detection type, a surface ultrasonic conduction type, an integral tension measurement type, a Piezo effect type, or any other similar and/or suitable type of touch pad, a jog wheel, and a jog switch, and any other similar and/or suitable type of input unit.

The memory 170 may store programs for the processing executed by the control unit 130 and for the control of the control unit 130 and also may store input/output data, such as content information, that is used and/or generated by the device 100.

The memory 170 may include at least one type of a storage medium, such as flash memory type memory, hard disk type memory, multimedia card micro type memory, card type memory, such as a Secure Digital (SD) or xD memory cards, Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, a magnetic disk, an optical disk, any type of nonvolatile computer-readable storage medium, and any other similar and/or suitable type of memory. Additionally, the device 100 may operate a web storage performing a storage function of the memory 170 on the internet. Moreover, the memory 170 may be implemented in a cloud server form.

The disclosure may also be embodied as computer readable codes on a computer readable recording medium. The computer readable recording medium may include a program command, a data file, a data structure, and a combination thereof. The program command recorded on the medium may be specially designed and configured or may be known to a computer software engineer of ordinary skill in the art. Examples of the computer readable recording medium include a hardware device that is configured to store and perform program commands, wherein the hardware device may be magnetic media such as hard disks, floppy disks, and magnetic tapes, optical media such as CD-ROMs and DVDs, magneto-optical media such as floptical disks, and memories such as ROMs, RAMs, and flash memories. Examples of the program command include a high-level language code executed by a computer through an interpreter, in addition to a machine language code created by a complier.

While the present disclosure has been shown and described with reference to various embodiments thereof, it will be understood by those skilled in the art that various changes in form and details may be made therein without departing from the spirit and scope of the present disclosure as defined by the appended claims and their equivalents.

**Claims**

1. A method of using a device to share content with a display device, the method comprising:

    dividing a playback section of the content into a plurality of sections;
    encoding data in a first section from among the plurality of sections;
    transmitting the encoded data in the first section to the display device via a first network channel; and
    transmitting data in a second section, from among the plurality of sections, to the display device via a second network channel while transmitting the encoded data in the first section to the display device.

2. The method of claim 1, wherein the dividing of the playback section of the content comprises determining a segment section between the first section and the second section in consideration of at least one of a bit rate of the content, a playback length of the content, and a bandwidth of the second network channel.

3. The method of claim 1, further comprising measuring at least one of a bandwidth of the first network channel and a bandwidth of the second network channel.

4. The method of claim 1, wherein the dividing of the playback section of the content comprises:

    changing a playback position of the content based on a user input; and

dividing a playback section that extends from the changed playback position to a last playback position into a plurality of sections.

5. The method of claim 1, wherein the dividing of the playback section of the content comprises:

comparing a bandwidth of the second network channel and a bit rate of the content; and
selectively dividing the playback section of the content based on a comparison result.

6. The method of claim 5, wherein the dividing of the playback section of the content comprises dividing the playback section of the content into a plurality of sections when the bandwidth of the second network channel is less than the bit rate of the content based on the comparison result.

7. The method of claim 1, wherein the first network channel and the second network channel each comprise a short-range communication channel.

8. The method of claim 1, wherein the first network channel comprises a Wireless-Fidelity (Wi-Fi) communication channel; and
the second network channel comprises a Wi-Fi Direct (WFD) communication channel.

9. The method of claim 1, further comprising transmitting data in a third section, from among the plurality of sections, to the display device via the first network channel while the data in the second section are played in the display device.

10. The method of claim 9, wherein the dividing of the playback section of the content comprises determining at least one segment point between the first section, the second section, and third section in consideration of at least one of a bit rate of the content, a playback length of the content, a bandwidth of the first network channel, and a bandwidth of the second network channel.

11. The method of claim 9, wherein the data in the second section and the data in the third section, which are transmitted to the display device, are uncompressed original data.

12. A non-transitory computer readable recording medium having a program recorded thereon, which, when executed by a computer, implements the method of claim 1.

13. A device to share content with a display device, the device comprising:

a control unit configured to divide a playback section of content into a plurality of sections;
an encoding unit configured to encode data in a first section from among the plurality of sections;
a first communication unit configured to transmit the encoded data in the first section to a display device via a first network channel; and
a second communication unit configured to transmit data in a second section, from among the plurality of sections, to the display device via a second network channel while the encoded data in the first section are transmitted to the display device.

14. The device of claim 13, wherein the control unit determines a segment section between the first section and the second section in consideration of at least one of a bit rate of the content, a playback length of the content, and a bandwidth of the second network channel.

15. The device of claim 13, further comprising a network measurement unit measuring at least one of a bandwidth of the first network channel and a bandwidth of the second network channel.

# FIG. 1

1000

SECOND NETWORK CHANNEL

100

200

DEVICE

FIRST NETWORK
CHANNEL

DISPLAY
DEVICE

# FIG. 2

START

DIVIDE PLAYBACK SECTION OF CONTENT
INTO A PLURALITY OF SECTIONS — S210

ENCODE DATA IN FIRST SECTION — S220

TRANSMIT ENCODED DATA IN FIRST SECTION TO
DISPLAY DEVICE VIA FIRST NETWORK CHANNEL — S230

TRANSMIT DATA IN SECOND SECTION TO DISPLAY
DEVICE VIA SECOND NETWORK CHANNEL — S240

END

# FIG. 3

```
┌──────────────┐                        ┌──────────────────┐
│    DEVICE    │── 100        200 ──│  DISPLAY DEVICE  │
└──────────────┘                        └──────────────────┘
        │                                        │
        ▼                                        │
┌──────────────────────┐                         │
│  MEASURE BANDWIDTH OF │── S310                  │
│    NETWORK CHANNEL    │                         │
└──────────────────────┘                         │
        │                                        │
        ▼                                        │
       ╱╲  S320     TRANSMIT CONTENT VIA ONE      │
      ╱    ╲        NETWORK CHANNEL (S330)        │
     ╱  BANDWIDTH < ╲──────────────────────────────▶
     ╲ BIT RATE OF  ╱ NO                          │
      ╲ CONTENT?   ╱                              │
       ╲╱                                         │
        │ YES                                     │
        ▼                                         │
┌──────────────────────────┐                      │
│ DIVIDE PLAYBACK SECTION OF│── S340               │
│ CONTENT INTO FIRST SECTION│                      │
│   AND SECOND SECTION      │                      │
└──────────────────────────┘                      │
        │                                         │
        │  TRANSMIT ENCODED DATA IN FIRST SECTION  │
        │  AND ORIGINAL DATA IN SECOND SECTION VIA │
        │  DIFFERENT NETWORK CHANNELS (S350)       │
        │─────────────────────────────────────────▶
        │                                         │
```

# FIG. 4

DEVICE — 100

200 — DISPLAY DEVICE

ENCODE DATA IN FIRST SECTION — S410

TRANSMIT ENCODED DATA IN FIRST SECTION VIA FIRST NETWORK CHANNEL(S420)

TRANSMIT ORIGINAL DATA IN SECOND SECTION VIA SECOND NETWORK CHANNEL(S430)

S440

PLAY FIRST SECTION (DECODING)

S450 — PLAY SECOND SECTION

# FIG. 5

VIDEO FRAME TO BE PLAYED
(PLAYBACK DIRECTION)

0 sec ⟶

① TRANSMISSION (LOW QUALITY)
VIA FIRST NETWORK
CHANNEL(WFD) → MIRRORING

② TRANSMIT ORIGINAL FILE (HIGH QUALITY) VIA
SECOND NETWORK CHANNEL (WI-FI) → STREAMING

Offset (500)

EP 2 779 678 A1

## FIG. 6A

## FIG. 6B

# FIG. 7

DEVICE — 100                    200 — DISPLAY DEVICE

MEASURE BANDWIDTH OF FIRST NETWORK AND BANDWIDTH OF SECOND NETWORK — S710

DIVIDE PLAYBACK SECTION OF CONTENT INTO FIRST SECTION, SECOND SECTION, AND THIRD SECTION — S720

ENCODE DATA IN FIRST SECTION — S730

TRANSMIT ENCODED DATA IN FIRST PLAYBACK SECTION VIA FIRST NETWORK CHANNEL(S740)

TRANSMIT ORIGINAL DATA IN SECOND SECTION VIA SECOND NETWORK CHANNEL(S750)

S760

PLAY FIRST SECTION (DECODING)

TRANSMIT ORIGINAL DATA IN THIRD SECTION VIA FIRST NETWORK CHANNEL(S780)

S770

PLAY SECOND SECTION

S790

PLAY THIRD SECTION

## FIG. 8A

VIDEO FRAME TO BE PLAYED
(PLAYBACK DIRECTION)

0 sec ⟶

| ① TRANSMISSION THROUGH WI-FI DIRECT DOWNSCALED IMAGE (LOW QUALITY) → MIRRORING | ② TRANSMISSION THROUGH WI-FI, ORIGINAL FILE (MAINTAIN HIGH QUALITY) → STREAMING | ③ TRANSMISSION THROUGH WI-FI DIRECT ORIGINAL FILE (MAINTAIN HIGH QUALITY) |

0      Offset1 (810)      Offset2 (820)

## FIG. 8B

$bw_2$      $bw_1$

| K | $Q_2$ | $Q_1$ |

FIG. 8C

EP 2 779 678 A1

# FIG. 9A

FIG. 9B

# FIG. 9C

100

Display device list

Living room TV ─900

My room TV

Refrigerator Display

Sister's mobile

# FIG. 9D

# FIG. 10

# FIG. 11

100

Europäisches
Patentamt

European
Patent Office

Office européen
des brevets

## EUROPEAN SEARCH REPORT

Application Number

EP 14 15 0620

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 262 260 A2 (COMCAST CABLE COMMUNICATIONS L [US] COMCAST CABLE COMM LLC [US]) 15 December 2010 (2010-12-15)<br>* [0010], [0014], [0015], [0017], [0052] *<br>* claims 1-3; figure 4 *<br>----- | 1,4,7-9, 11-13 | INV.<br>H04N21/4363<br>H04N21/442<br>H04N21/462<br>H04N21/845 |
| X | WO 2012/037970 A1 (NOKIA SIEMENS NETWORKS OY [FI]; NEVOLA ALESSANDRO [IT]; PASQUIN STEFAN) 29 March 2012 (2012-03-29)<br>* page 1, line 7 - line 13 *<br>* page 1, line 29 - line 33 *<br>* page 3, line 10 - line 26 *<br>* page 5, line 24 - line 33 *<br>* page 6, line 21 - line 26 *<br>* page 8, line 14 - line 19 *<br>* page 10, line 32 - page 11, line 30 *<br>* figure 3 *<br>----- | 1-4,7-15 | |
| X | EP 2 362 651 A1 (THOMSON LICENSING [FR]) 31 August 2011 (2011-08-31)<br><br>* [0009]-[0024], [0031], [0034]-[0038], [0042]-[0053], [0077] *<br>* figure 2 *<br>----- | 1-3, 5-10, 12-15 | TECHNICAL FIELDS SEARCHED (IPC)<br><br>H04N |
| X | US 2008/235391 A1 (PAINTER CHRISTOPHER [US] ET AL) 25 September 2008 (2008-09-25)<br>* [0004]-[0007], [0041] *<br>* claims 1,4 *<br>----- | 1-15 | |
| A | US 2005/216950 A1 (MACINNIS ALEXANDER G [US]) 29 September 2005 (2005-09-29)<br>* [0008]-[0010] *<br>----- | 1-15 | |

The present search report has been drawn up for all claims

| Place of search | Date of completion of the search | Examiner |
|---|---|---|
| The Hague | 30 May 2014 | La, Valérie |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 14 15 0620

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2014

| Patent document cited in search report | | Publication date | Patent family member(s) | | Publication date |
|---|---|---|---|---|---|
| EP 2262260 | A2 | 15-12-2010 | CA | 2703413 A1 | 29-11-2010 |
| | | | EP | 2262260 A2 | 15-12-2010 |
| | | | US | 2010306401 A1 | 02-12-2010 |
| WO 2012037970 | A1 | 29-03-2012 | EP | 2619946 A1 | 31-07-2013 |
| | | | WO | 2012037970 A1 | 29-03-2012 |
| EP 2362651 | A1 | 31-08-2011 | CN | 102763428 A | 31-10-2012 |
| | | | EP | 2362651 A1 | 31-08-2011 |
| | | | EP | 2537340 A1 | 26-12-2012 |
| | | | JP | 2013520119 A | 30-05-2013 |
| | | | KR | 20130004567 A | 11-01-2013 |
| | | | US | 2012311174 A1 | 06-12-2012 |
| | | | WO | 2011101371 A1 | 25-08-2011 |
| US 2008235391 | A1 | 25-09-2008 | CN | 101641685 A | 03-02-2010 |
| | | | EP | 2145257 A1 | 20-01-2010 |
| | | | JP | 5464423 B2 | 09-04-2014 |
| | | | JP | 2010522472 A | 01-07-2010 |
| | | | US | 2008235391 A1 | 25-09-2008 |
| | | | US | 2011191419 A1 | 04-08-2011 |
| | | | US | 2011191420 A1 | 04-08-2011 |
| | | | US | 2014115106 A1 | 24-04-2014 |
| | | | WO | 2008118252 A1 | 02-10-2008 |
| US 2005216950 | A1 | 29-09-2005 | US | 2005216950 A1 | 29-09-2005 |
| | | | US | 2010043036 A1 | 18-02-2010 |
| | | | US | 2011093906 A1 | 21-04-2011 |
| | | | US | 2013263195 A1 | 03-10-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130026304
- US 7698467 B2